# EUROPÄISCHE PATENTANMELDUNG

(11) **EP 1 018 813 A2**
(43) Veröffentlichungstag der Anmeldung: **12.07.2000**
(21) Anmeldenummer: 99440364.0
(22) Anmeldetag: 20.12.1999
(51) Int. Cl.: H04H 1/02, H04B 3/38, H04N 7/173

(54) **Modul für ein Fernmeldenetz mit einem Vorwärtskanal und einem Rückkanal**

(30) Priorität: 23.12.1998 DE 19859642
(71) Anmelder: ALCATEL, 75008 Paris (FR)
(72) Erfinder: Grammel, Gert, 73066 Uhingen (DE)
(74) Vertreter: Menzietti, Domenico, Dipl.-Ing

(57) **Zusammenfassung**

Die Erfindung betrifft ein Modul für ein Übertragungsnetz mit einem Vorwärtskanal und einem Rückkanal zur bidirektionalen Übertragung von Nachrichtensignalen. Es ist eine Aufgabe der Erfindung ein Übertragungsnetz mit einer verbesserten Überwachung der Nachrichtensignale, insbesondere im Rückkanal zu schaffen.

Gelöst wird die Aufgabe durch ein Modul (Ml, M2, M3, M4), das insbesondere dadurch gekennzeichnet ist, daß es einen Teilbereichs des Rückkanals überwacht, der nicht zur Übertragung von Nachrichtensignalen verwendet wird, und aus dieser Überwachung auf die Qualität des gesamten Rückkanals geschlossen wird. Die Überwachung wird somit losgelöst von den Nachrichtensignalen durchgeführt. Es muß nicht mehr der gesamte Rückkanal überwacht werden. Für eine vergleichbare Überwachung wird daher eine geringere Anzahl von Messungen benötigt. Zur Messung wird alleinig der Rauschpegel in einem ungenutzten Teilbereich herangezogen oder es wird eine Bitfehlermessung eines vorgegebenen Testsignals (T) ermittelt. Das Testsignal (T) hat immer die gleiche Amplitude und Phase, was die Messung vereinfacht und die Genauigkeit erhöht.

## Beschreibung

Die Erfindung betrifft ein Modul für ein Punkt-zu-Mehrpunkt Übertragungsnetz gemäß dem Obergriff des Patentanspruchs 1.

Als Punkt-zu-Mehrpunkt Übertragungsnetz ist z.B. ein interaktives und kommunikatives Netz bekannt, das eine Zentrale aufweist, die z.B. über ein elektrisches, ein optisches oder ein hybrides Netz aus optischen und elektrischen Leitungen und ggf. über Unterzentralen mit einer Vielzahl von Endstellen verbunden ist. Im interaktiven und kommunikativen Netz werden Nachrichtensignale von der Zentrale zu der Vielzahl von Endstellen über einen Vorwärtskanal und Nachrichtensignale von der Vielzahl von Endstellen zur Zentrale über einen Rückkanal übertragen. Alle Endstellen haben, abhängig vom Zugriffsverfahren, z.B. CDMA oder TDMA, die Möglichkeit gleichzeitig Nachrichtensignale über den Rückkanal zur Zentrale zu übertragen, CDMA=Code Division Multiple Access, TDMA=Time Division Multiple Access. Unterschiedliche Endstellen haben unterschiedlichen Bedarf an Nachrichtensignalübertragungen, z.B. Telefonie, Bildtelefonie, Internetzugang, Nutzung interaktiver Angebote, z.B. Videofilme, Lernprogramme, etc., so daß der Signalpegel der Summe der von den Endstellen ausgesendeten Nachrichtensignale mit der Zeit schwankt. Zusätzlich kommt hinzu, daß Störsignale, z.B. hervorgerufen durch Alterung oder Temperatureffekten ins Netz eindringen können und insbesondere zu Störungen im Rückkanal führen können. Es ist auch denkbar, daß aufgrund einer Fehlfunktion im Bereich einer Endstelle diese Endstelle ein Störsignal in Form eines Dauertons sendet, der sich mit den Nachrichtensignalen der anderen Endstellen überlagert. Dadurch könnte es in der Zentrale im empfangenen Rückkanalfrequenzbereich zu einem derart schlechten Signal-zu-Rausch Verhältnis kommen, daß die Zentrale die Nachrichtensignale nicht mehr detektieren könnte. Somit wären alle Endstellen blockiert.

Eine Lösungmöglichkeit zur Vermeidung obiger Nachteile ist in EP 0844791 beschrieben. In einem hybriden Glasfaser-Koaxialkabel-Zugangsnetz mit Vorwärtskanal und Rückkanal dient der Rückkanal zur Übertragung von Sprach- und Videosignalen sowie Datensignalen von Gruppen von Endstellen zu einer Unterzentrale. Der Übergabepunkt bildet die Schnittstelle zwischen dem Betreiber-Zugangsnetz und dem privaten Netz der Teilnehmerendstelle. Der Übergabepunkt beinhaltet wenigstens zwei Einrichtungen zur frequenzmäßigen Aufteilung von empfangenen Signalen im Rückkanalfrequenzbereich, wenigstens zwei Schalter, die den wenigstens zwei Einrichtungen nachgeschaltet sind und zum Sperren oder Freischalten einzelner Rückkanalfrequenzbereiche dienen, eine Messeinrichtung zum Messen der Amplituden oder der Intensitäten der Signale in den aufgeteilten Frequenzbereichen und eine Steuereinheit zur Auswertung der gemessenen Werte und zur Ansteuerung der wenigstens zwei Schalter. Für eine Endstelle können einzelne Frequenzbereiche des Rückkanals damit telemetrisch, temporär gesperrt werden. Eine dezentrale und autarke Überwachung einzelner Rückkanalfrequenzbereiche erfolgt durch eine vom Übergabepunkt selbst angesteuerte Messeinrichtung. Durch Messung der Intensität oder der Amplitude eines Nachrichtensignals in einem Teilbereich und dem anschließenden Vergleich mit einem vorgegebenen Schwellwert wird demnach bestimmt, ob der gemessene Teilbereich gesperrt oder freigeschaltet wird. Die im Teilbereich übertragenen Nachrichtensignale schwanken jedoch mit der Zeit, so daß Messungen über die Zeit ungenau werden können und die anschließenden Vergleiche mit einem vorgegebenen Schwellwert aufgrund der Ungenauigkeit der Messungen zu verfälschten Ergebnissen führen können. Zudem kann durch die Messung selbst das Nachrichtensignal negativ beeinflußt werden, was zu zusätzlichen Störungen führen kann.

Es ist daher eine Aufgabe der Erfindung ein Übertragungsnetz mit einer verbesserten Überwachung der Nachrichtensignale, insbesondere im Rückkanal zu schaffen.

Gelöst wird die Aufgabe durch ein Modul gemäß Patentanspruch 1. Das Modul ist insbesondere dadurch gekennzeichnet, daß es einen Teilbereichs des Rückkanals überwacht, der nicht zur Übertragung von Nachrichtensignalen verwendet wird, und aus dieser Überwachung auf die Qualität des gesamten Rückkanals geschlossen wird. Die Überwachung wird somit losgelöst von den Nachrichtensignalen durchgeführt. Es muß nicht mehr der gesamte Rückkanal überwacht werden. Für eine vergleichbare Überwachung wird daher eine geringere Anzahl von Messungen benötigt. Zur Messung wird alleinig der Rauschpegel in einem ungenutzten Teilbereich herangezogen oder es wird eine Bitfehlermessung eines vorgegebenen Testsignals ermittelt. Das Testsignal hat immer diegleiche Amplitude und Phase, was die Messung vereinfacht und die Genauigkeit erhöht.

Vorteilhafte Ausgestaltungen sind den abhängigen Patentansprüchen zu entnehmen.

Im folgenden wird ein Ausführungsbeispiel der Erfindung unter Zuhilfenahme der Figuren 1 bis 5 erläutert. Es zeigen:
- Fig. 1: eine schematische Darstellung eines erfindungsgemäßen Übertragungsnetzes,
- Fig. 2: einen schematisch dargestellten Aufbau eines erfindungsgemäßen Moduls des Übertragungsnetzes aus Fig. 1,
- Fig. 3: einen weiteren Aufbau eines erfindungsgemäßen Moduls aus Fig. 1,
- Fig. 4: einen weiteren Aufbau eines erfindungsgemäßen Moduls aus Fig. 1 und
- Fig. 5: ein Amplitudenspektrum über die Frequenz.

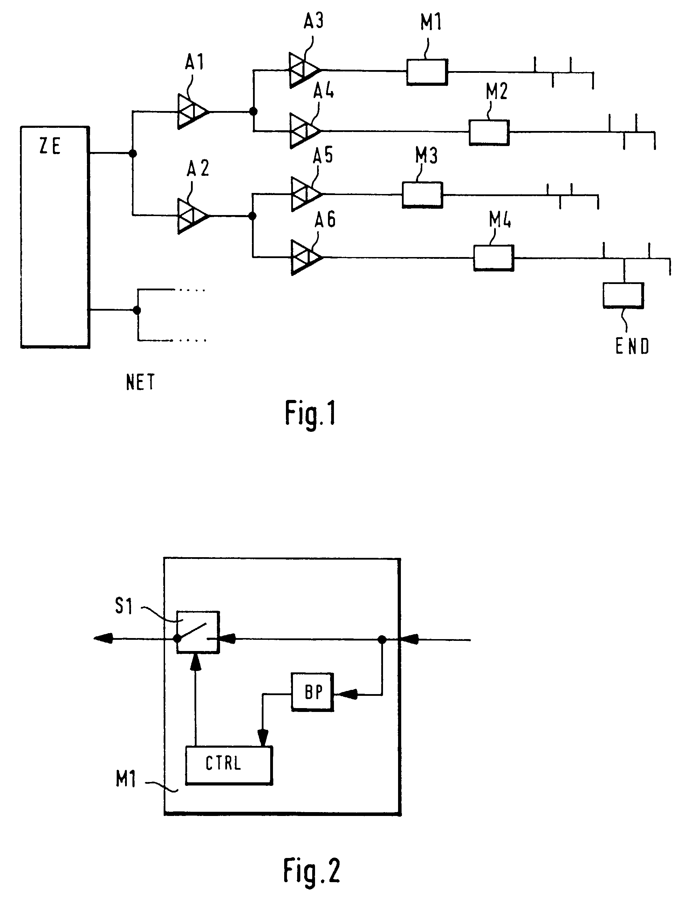

Das Ausführungsbeispiel wird nun zunächst unter Zuhilfenahme von Fig. 1 erläutert. Fig. 1 zeigt ein erfindungsgemäßes Punkt-zu-Mehrpunkt Übertragungsnetz NET. Das Übertragungsnetz NET ist als elektrisches, bidirektionales Netz ausgeführt. Eine Zentrale ZE ist über ein Baumnetz mit einer Vielzahl von Endstellen END, wovon beispielhaft eine dargestellt ist, verbunden. Nachrichtensignale werden von der Zentrale ZE zu den Endstellen END über einen Vorwärtskanal übertragen, Nachrichtensignale von den Endstellen END zur Zentrale ZE über einen Rückkanal. Zwischen Zentrale ZE und Endstellen sind bidirektionale Verstärker A1, A2, A3, A4, A5, A6 zum Verstärken der übertragenen Nachrichtensignale geschaltet. Zwischen den Verstärkern A1, A2, A3, A4, A5, A6 und den Endstellen END sind Module M1, M2, M3, M4 geschaltet. Die Module Ml, M2, M3, M4 dienen zum Überwachen des Rückkanals. Der Rückkanal wird von den Endstellen z.B. genutzt für Telefonie, Bildtelefonie, Internet, Abrufsignale für Viedeofilme, Lernprogramme, etc..

Fig. 2 zeigt einen schematisch dargestellten Aufbau des erfindungsgemäßen Moduls Ml des Übertragungsnetzes aus Fig. 1. Alle Module M1 bis M4 haben den gleichen Aufbau. Das Modul M1 beinhaltet eine erste Einrichtung BP zur Separierung eines ersten Teilbereichs des Rückanals, der nicht zur Übertragung von Nachrichtensignalen verwendet wird. Die Einrichtung BP ist beispielsweise als Bandpaß, Tiefpaß oder Bandsperre ausgeführt. Nur dieser Teilbereich wird nun vom Modul Ml überwacht. Aus dieser Überwachung wird auf die Qualität des gesamten Rückkanals geschlossen. Ist die Qualität unter einer gewissen Mindestqualität, wird beispielsweise der gesamte Rückkanal direkt gesperrt oder alternativ die Zentrale ZE informiert. Das Modul M1 arbeitet beispielsweise autark oder gesteuert durch die Zentrale ZE, so daß für den Fall, daß sich die Qualität der Nachrichtensignale im ersten Teilbereich wieder verbessert, der gesamte Rückkanal automatisch oder auf Anweisung der Zentrale ZE wieder freigeschaltet wird.

Das Modul M1 beinhaltet eine Meßeinrichtung CTRL zur Messung der Empfangsqualität im ersten Teilbereich. Die Messung erfolgt unter Berücksichtigung des Rauschen in diesem Teilbereich.

Im Teilbereich wird beispielsweise kein Signal übertragen. Im Normalfall ist dann stets nur ein Rauschen vorhanden, daß um einen bestimmten Wert schwankt. Die Meßeinrichtung beinhaltet beispielsweise einen Schwellwertdetektor. Der Schwellwertdetektor hat eine Komparatorfunktion. Bleibt das Rauschen unter einem bestimmten Schwellwert, so ist dies der Normalzustand. Durch Störsignale im Rückkanal, welche sich meist breitbandig auswirken, wird auch das Rauschen im gesamten Rückkanal, also auch in dem Teilbereich, der nicht zur Nachrichtenübertragung genutzt wird, erhöht. Der Schwellwertdetektor stellt diese Erhöhung des Rauschens fest. Nun wird entweder der gesamte Rückanal direkt für weitere Nachrichtenübertragungen gesperrt oder zunächst die Zentrale ZE über das erhöhte Rauschen unterrichtet. Im ersten Fall wird beipielsweise anschließend die Zentrale ZE unterrichtet. Im zweiten Fall überprüft die Zentrale beispielsweise zunächst, ob sich die lokale Störung derart global auswirkt, daß der Empfang der Nachrichtensignale aller Endstellen über die Maße gestört ist und entscheidet anschließend, ob der Rückkanal für einzelne Endstellengruppen gesperrt werden soll oder nicht.

Alternativ wird im Teilbereich beispielsweise ein Testignal übertragen. Im Normalfall ist dann stets nur das Testsignal plus ein Rauschen vorhanden, daß um einen bestimmten Wert schwankt. Das Testsignal wird beispielsweise stetig von einer Endstelle ausgesandt. Alternativ beinhaltet das Modul Ml einen Testsignalgenerator zur Erzeugung des Testsignals. Neben dem Testsignalgenerator ist ein Koppler vorgesehen, der zwischen die erste Einrichtung BP und die Meßeinrichtung CTRL geschaltet ist und zum Einkoppeln des Testsignals in den separierten Teilbereich des Rückkanals dient. Das Testsignal ist ein vorgegebenes Signal mit einer vorgebebenen Amplitude und Phase. Dadurch hat insbesondere die Amplitude des Testsignals immer dengleichen Wert. Somit bleibt auch das Signal-zu-Rausch Verhältnis des Testsignals nahezu konstant über die Zeit. Die Meßeinrichtung CTRL beinhaltet beispielsweise einen Bitfehlermesser. Werden keine Bitfehler gemessen, so ist dies der Normalzustand. Durch Störsignale im Rückkanal, welche sich meist breitbandig auswirken, wird auch das Rauschen im gesamten Rückkanal, also auch in dem Teilbereich, der nicht zur Nachrichtenübertragung genutzt wird, erhöht. Durch diese Erhöhung des Rauschens verändert sich auch das Signal-zu-Rausch Verhältnis des Testsignals. Die Meßeinrichtung stellt nun Bitfehler fest, die sich in ihrer Anzahl mit zunehmendem Rauschpegel erhöhen. Nun wird entweder der gesamte Rückanal direkt für weitere Nachrichtenübertragungen gesperrt oder zunächst die Zentrale ZE über das erhöhte Rauschen, das Auftreten der Bitfehler oder die genaue Bitfehlerrate unterrichtet. Im ersten Fall wird beipielsweise anschließend die Zentrale ZE unterrichtet. Im zweiten Fall überprüft die Zentrale beispielsweise zunächst, ob sich die lokale Störung derart global auswirkt, daß der Empfang der Nachrichtensignale aller Endstellen über die Maße gestört ist und entscheidet anschließend, ob der Rückkanal für einzelne Endstellengruppen gesperrt werden soll oder nicht.

Das Modul Ml beinhaltet einen Schalter S1. Die Nachrichtensignale im Rückkanal werden über den Schalter S1 zum Verstärker A3 weitergeleitet. Der Schaltet S1 dient zum Sperren und Freischalten des Rückkanals. Er wird durch die Meßeinrichtung CTRL angesteuert, die beispielsweise zusätzlich einen Digitalen Signalprozessor zur Auswertung und Verarbeitung, sowie ggf. einen Speicher, z.B. ein RAM, enthält; RAM=Read Access Memory. Der Schalter S1 ist beispielsweise als Bipolartransistor oder als Relais ausgeführt.

Anstelle des Schalter S1 kann auch ein verstellbares Dämpfungsglied vorgesehen sein. Das verstellbare Dämpfungsglied dämpft die Nachrichtensignale im Rückkanal unterschiedlich stark in Abhängigkeit vom gemessenen Rauschpegel bzw. Signal-zu-Rauschverhältnis des Testsignals. Im Normalfall werden die Nachrichtensignale gar nicht oder wenig gedämpft. Tritt eine Störung auf, so wird die Dämpfung derart verstellt, daß die Nachrichtensignale so abgeschwächt werden, daß sie die die anderen Module M2 bis M4 passierenden Nachrichtensignale nicht mehr oder nur noch geringfügig negativ beeinflussen können.

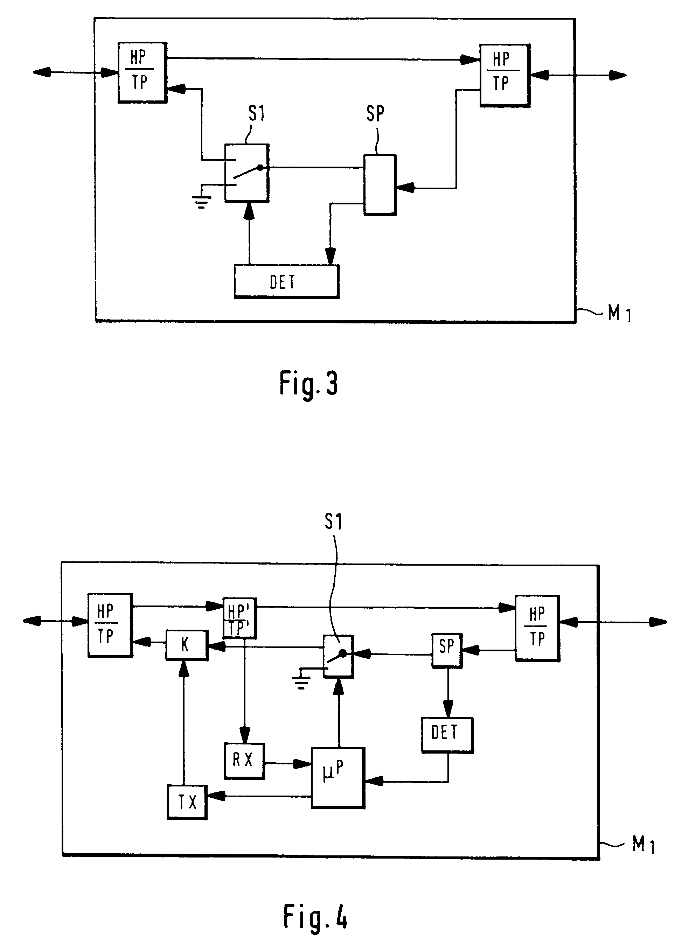

Fig. 3 zeigt einen weiteren Aufbau eines erfindungsgemäßen Moduls aus Fig. 1. Das Modul ist beispielsweise Modul Ml. Alle Module Ml bis M4 haben den gleichen Aufbau. Das Modul M1 beinhaltet zwei Hochpaß/Tiefpaßfilter HP/TP. Die Hochpaß/Tiefpaßfilter HP/TP dienen dazu, die Nachrichtensignale im Vorwärtskanal von den Nachrichtensignalen im Rückkanal zu trennen. Die Nachrichtensignale im Rückkanal werden einem Splitter SP zugeführt, in dem sie nochmals aufgeteilt werden. Der Teilbereich des Rückkanals, der für die Nachrichtensignalübertragung verwendet wird, wird einem Schalter S1 zugeführt, der die Nachrichtensignale in der einen Stellung zur Zentrale ZE weiterleitet und in der anderen Stellung nicht weiterleitet. Der Teilbereich des Rückkanals, in dem keine Nachrichtensignale übertragen werden, wird einer Detektionseinrichtung DET zugeführt. Die Detektionseinrichtung DET detektiert den Rauschpegel in dem Teilbereich, in welchem keine Nachrichtensignale übertragen werden. Alternativ wird ein Testsignal als Referenzsignal herangezogen, um eine Bitfehlermessung des Testsignals durchzuführen. Für die genaue Durchführung der Messungen und den zahlreichen Varianten der Auswertung der Messungen wird auf die Ausführungen zu Fig. 2 verwiesen.

Fig. 4 zeigt einen weiteren Aufbau eines erfindungsgemäßen Moduls aus Fig. 1. Das Modul ist beispielsweise Modul M1. Alle Module M1 bis M4 haben den gleichen Aufbau. Das Modul M1 beinhaltet zwei Hochpaß/Tiefpaßfilter HP/TP. Die Hochpaß/Tiefpaßfilter HP/TP dienen dazu, die Nachrichtensignale im Vorwärtskanal von den Nachrichtensignalen im Rückkanal zu trennen. Die Nachrichtensignale im Rückkanal werden einem Splitter SP zugeführt, in dem sie nochmals aufgeteilt werden. Der Teilbereich des Rückkanals, der für die Nachrichtensignalübertragung verwendet wird, wird einem Schalter S1 zugeführt, der die Nachrichtensignale in der einen Stellung zur Zentrale ZE weiterleitet und in der anderen Stellung nicht weiterleitet. Der Teilbereich des Rückkanals, in dem keine Nachrichtensignale übertragen werden, wird einer Detektionseinrichtung DET zugeführt. Die Detektionseinrichtung DET detektiert den Rauschpegel in dem Teilbereich, in welchem keine Nachrichtensignale übertragen werden. Alternativ wird ein Testsignal als Referenzsignal herangezogen, um eine Bitfehlermessung des Testsignals durchzuführen. Für die genaue Durchführung der Messungen und den zahlreichen Varianten der Auswertung der Messungen wird auf die Ausführungen zu Fig. 2 verwiesen.

Ferner beinhaltet das Modul M1 einen Mikroprozessor µP, der die Meßergebnisse der Detektionseinrichtung DET auswertet und den Schalter S1 ansteuert. Des weiteren ist eine Sendeeinrichtung TX vorgesehen, die mit dem Mikroprozessor µP verbunden ist. Über die Sendeeinrichtung TX können z.B. die Meßergebnisse z.B. zum Verstärker A3, zum Verstärker A1 und/oder zur Zentrale ZE übertragen werden. Dazu ist ein Koppler K vorgesehen, der zwischen dem Schalter S1 und dem ersten Hochpaß/Tiefpaßfilter HP/LP angeordnet ist und dazu dient die zu übertragenden Meßergebnisse mit den zu übertragenden Nachrichtensignale zu verbinden, um diese gemeinsam zu übertragen. Des weiteren ist eine Empfangseinrichtung RX vorgesehen, die mit dem Mikroprozessor µP verbunden ist. Über die Empfangseinrichtung RX können z.B. die Ansteuerungssignale der Zentrale ZE empfangen werden. Dazu ist ein weiterer Hochpaß/Tiefpaßfilter HP'/LP' vorgesehen, der zwischen den beiden Hochpaß/Tiefpaßfilter HP/LP angeordnet ist und dazu dient die zu empfangenden Ansteuerungssignale von den zu empfangenden Nachrichtensignale zu trennen, um diese getrennt weiterzuleiten.

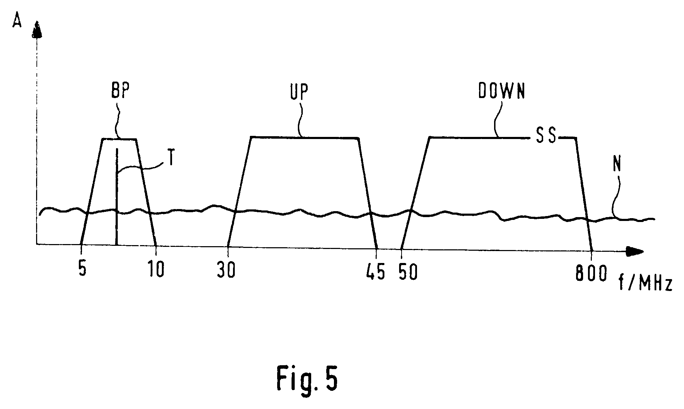

Fig. 5 zeigt ein Amplitudenspektrum über die Frequenz für den Vorwärts- und Rückkanal des Übertragungsnetzes aus Fig. 1. Gezeigt sind drei Frequenzbereiche sowie das Rauschen N, das sich über den gesamten Frequenzbereich erstreckt. Der erste Frequenzbereich BP ist der Teilbereich des Rückkanals, in dem keine Nachrichtensignale übertragen werden und der zur Ermittlung der Empfangsqualität genutzt wird. Der Frequenzbereich BP erstreckt sich beispielhaft von 5 MHz bis 10 MHz. In diesem Frequenzbereich liegt auch das Testsignal T, falls eines verwendet wird. Der zweite Frequenzbereich UP erstreckt sich beispielhaft von 30 MHz bis 45 MHz und ist der Teilbereich des Rückkanals, in dem Nachrichtensignale übertragen werden. Der dritte Frequenzbereich DOWN erstreckt sich beispielhaft von 50 MHz bis 450 MHz und unter Ausnutzung des Sonderkanalbereichs bis 800 MHz und ist der Bereich des Vorwärtskanals, in dem Nachrichtensignale übertragen werden. Der Frequenzbereich BP kann auch zwischen die Frequenzbereiche UP und DOWN angeordnet werden. Werden Störungen im Frequenzbereich BP detektiert und daraufhin der Frequenzbereich UP gesperrt, so kann der Frequenzbereich BP verwendet werden, um eine Alarmmeldung oder Meßergebnisse zur Zentrale zu übertragen.

Im Ausführungsbeispiel ist das Übertragungsnetz als elektrisches Netz ausgeführt. Anstelle auf ein elektrisches Netz kann die Erfindung auch auf ein optisches oder ein hybrides Netz, z.B. ein Glasfaser/Koaxialkabel-Netz angewendet werden. Die Erfindung ist unabhängig von den zu übertragenden Nachrichten. Bei einem hybriden Netz ist die Plazierung der Module an den Übergängen zwischen Optik und Elektrik sinnvoll.

Das Übertragunsgnetz ist im Ausführungsbeispiel als Baumnetz ausgeführt. Die Erfindung kann anstelle auf ein Baumnetz auch auf ein Sternnetz oder ein Maschennetz angewendet werden.

Beim Ausführungsbeispiel sind bidirektionale Verstärker verwendet. Der Einsatz der Verstärker ist optional, abhängig von den Entfernungen zwischen Zentrale und Endstellen und der gewünschten Übertragungsqualität. In einem optischen Netz können die Verstärker durch optische Verstärker ersetzt werden.

Im Ausführungsbeispiel sind die Module zwischen den Verstärkern und den Endstellen angeordnet. Die Platzierung der Module im Netz ist nicht fest vorgegeben. Die Module können z.B. auch zwischen Verstärker A1 und Verstärkern A3, A4 sowie zwischen Verstärker A2 und Verstärkern A5, A6 plaziert werden. Durch die Plazierung im Netz wird die Anzahl der durch ein Modul zu überwachenden Endstellen bzw. der Nachrichtensignale dieser Endstellen im Rückkanal vorgegeben. An Verstärker A3 sind beispielsweise 10 Endstellen angeschlossen, an Verstärker A4 beispielsweise ebenfalls 10. Der Netzbetreiber hat nun die Wahl durch die Plazierung der Module die Anzahl der zu überwachenden Endstellen vorzugeben. Wird ein Modul zwischen Verstärker A3 und den angeschlossenen Endstellen plaziert werden von diesem Modul 10 Endstellen überwacht. Plaziert man das Modul zwischen Verstärker A1 und Verstärkern A3, A4 werden 20 Endstellen überwacht. Im ersten Fall werden doppelt soviel Module benötigt wie im zweiten Fall. Dafür werden im Fehlerfall nur 10 Endstellen abgeschaltet, im Vergleich zu 20 im zweiten Fall.

Im Ausführungsbeispiel haben alle Module den gleichen Aufbau. Dies ist sinnvoll, wenn sie alle in der gleichen Ebene eingesetzt werden. Werden in Fig. 1 beispielsweise zusätzlich zwei Module zwischen Verstärker A1 und Verstärkern A3, A4 bzw. zwischen Verstärker A2 und Verstärkern A5, A6 eingesetzt, so können dafür Module unterschiedlichen Typs verwendet werden. Für die Module M1 bis M4 beispielsweise Module nach Fig. 1, für die zusätzlichen Module beispielsweise Module nach Fig. 3 oder 4. Wenn für die zusätzlichen Module Module nach Fig. 4 verwendet werden, können die Module M1 bis M4 durch einen einfachen fernsteuerbaren Schalter oder ein fernsteuerbares, verstellbares Dämpfungsglied ersetzt werde. Die Module M1 bis M4 werden dann durch die zusätzlichen Module telemetrisch gesteuert. Detektiert das erste zusätzliche Modul beispielsweise eine Störung, so steuert es zunächst Modul M1 derart an, daß dieses die Nachrichtensignale im Rückkanal sperrt. Ist die Störung dann im ersten zusätzlichen Modul nicht mehr detektierbar, so liegt die Störung im Bereich der Endstellen, die mit Modul M1 verbunden sind. Ist die Störung im ersten zusätzlichen Modul weiterhin detektierbar, so steuert es Modul M1 derart an, daß dieses die Nachrichtensignale im Rückkanal freischaltet und Modul M2 derart an, daß dieses die Nachrichtensignale im Rückkanal sperrt. Ist die Störung dann im ersten zusätzlichen Modul nicht mehr detektierbar, so liegt die Störung im Bereich der Endstellen, die mit Modul M1 verbunden sind. Ist die Störung im ersten zusätzlichen Modul weiterhin detektierbar, so liegt die Störung im Bereich der Verstärker A3, A4. Die Störung ist damit lokalisiert und kann durch einen Techniker behoben werden.

Beim Ausführungsbeispiel wird nur der Rückanal überwacht. Anstelle des Rückkanals kann auch nur der Vorwärtskanal oder zusätzlich zum Rückkanal auch der Vorwärtskanal überwacht werden. Die Module sind dann entsprechend zu modifizieren. Z.B. wird ein Bandpaß eingefügt, der einen ersten Teilbereich des Vorwärtskanal vom Rest des Vorwärtskanals separiert. Im ersten Teilbereich des Vorwärtskanals werden keine Nachrichtensignale übertragen; anstelle dessen z.B. ein Testsignal. Eine Meßeinrichtung überwacht dann die Empfangsqualität in diesem ersten Teilbereich. Die Erfindung kann 1:1 vom Rückkanal auf den Vorwärtskanal übertragen werden. Entsprechende Modifikationen sind u.a. in den Fig. 2 bis 4 erforderlich.

Das Übertragungsnetz des Ausführungsbeispiels ist als bidirektionales Netz ausgeführt. Anstelle auf ein bidirektionales Netz kann die Erfindung auch auf ein Verteilnetz angewendet werden. Bei einem Verteilnetz werden Nachrichtensignale von einer Zentrale zu einer Vielzahl von Unterzentralen, Knoten oder Endstellen über einen Vorwärtskanal übertragen. Module werden entsprechend im Netz plaziert, z.B. in den Unterzentralen, um den Vorwärtskanal zu überwachen.

## Patentansprüche

1. Modul (M1, M2, M3, M4) für ein Punkt-zu-Mehrpunkt Übertragungsnetz (NET) mit einem Vorwärtskanal und einem Rückkanal zur bidirektionalen Übertragung von Nachrichtensignalen,
**dadurch gekennzeichnet,**
daß eine erste Einrichtung (BP) vorgesehen ist zur frequenzmäßigen Separierung eines ersten Teilbereichs des Rückkanals, der nicht zur Übertragung von Nachrichtensignalen verwendet wird, und
daß eine Meßeinrichtung (CTRL; DET, µP) vorgesehen ist zur Messung der Empfangsqualität in diesem ersten Teilbereich unter Berücksichtigung des Rauschen in diesem ersten Teilbereich.

2. Modul (Ml, M2, M3, M4) nach Anspruch 1, dadurch gekennzeichnet, daß ein Schalter (S1) vorgesehen ist für einen zweiten Teilbereich des Rückkanals, der zur Übertragung von Nachrichtensignalen verwendet wird, daß der Schalter (S1) zum Sperren und Freischalten dieses zweiten Teilbereichs dient, daß die Meßeinrichtung (CTRL; DET, µP) geeignet ist den Schalter (S1) anzusteuern, und daß die Meßeinrichtung (CTRL; DET, µP) den Schalter (S1) in Abhängigkeit der im ersten Teilbereich gemessenen Werte unterschiedlich ansteuert, um ein Freischalten oder Sperren des zweiten Teilbereichs zu bewirken.

3. Modul (M1, M2, M3, M4) nach Anspruch 1, dadurch gekennzeichnet, daß ein verstellbares Dämpfungsglied vorgesehen ist für einen zweiten Teilbereich des Rückkanals, der zur Übertragung von Nachrichtensignalen verwendet wird, daß das verstellbare Dämpfungsglied zum unterschiedlichen Dämpfen der Nachrichtensignale im zweiten Teilbereichs dient, daß die Meßeinrichtung (CTRL; DET, µP) geeignet ist das verstellbare Dämpfungsglied anzusteuern, und daß die Meßeinrichtung (CTRL; DET, µP) das verstellbare Dämpfungsglied in Abhängigkeit der im ersten Teilbereich gemessenen Werte unterschiedlich ansteuert, um ein unterschiedliches Dämpfen der Nachrichtensignale im zweiten Teilbereichs zu bewirken.

4. Modul (M1, M2, M3, M4) nach Anspruch 1, dadurch gekennzeichnet, daß der erste Teilbereich des Rückkanals zur Übertragung eines Testsignals verwendet wird, und daß die Meßeinrichtung (CTRL; DET, µP) geeignet ist eine Bitfehlermessung bezüglich des Testsignals durchzuführen.

5. Modul (M1, M2, M3, M4) nach Anspruch 4, dadurch gekennzeichnet, daß ein Testsignalgenerator zur Erzeugung des Testsignals vorgesehen ist, und daß ein Koppler vorgesehen ist, der zwischen die erste Einrichtung (BP) und die Meßeinrichtung (CTRL; DET, µP) geschaltet ist und zum Einkoppeln des Testsignals in den ersten Teilbereich des Rückkanals dient.

6. Modul (M1, M2, M3, M4) nach Anspruch 1, dadurch gekennzeichnet, daß eine Sendeeinrichtung (TX) vorgesehen ist, die mit der Meßeinrichtung (CTRL; DET, µP) verbunden ist und geeignet ist, eine Alarmmeldung und/oder die Meßergebnisse der Meßeinrichtung (CTRL; DET, µP) über den Rückkanal und/oder den Vorwärtskanal zu übertragen.

7. Modul (M1, M2, M3, M4) nach Anspruch 1, dadurch gekennzeichnet, daß die Meßeinrichtung (CTRL; DET, µP) geeignet ist aus den gemessenen Werten Ansteuerungssignale für mindestens einen Schalter (S1) oder mindestens ein verstellbares Dämpfungsglied, die außerhalb des Moduls angeordnet sind, zu generieren, daß eine Sendeeinrichtung vorgesehen ist, die mit der Meßeinrichtung (CTRL; DET, µP) verbunden ist und geeignet ist, die von der Meßeinrichtung (CTRL; DET, µP) generierten Ansteuerungssignale über den Rückkanal und/oder den Vorwärtskanal des Übertragungsnetzes (NET) zu übertragen.

8. Modul (M1, M2, M3, M4) nach Anspruch 1, dadurch gekennzeichnet, daß die erste Einrichtung (BP) als Bandpaß, Bandsperre, Tiefpaß oder Splitter ausgeführt ist.

9. Modul (M1, M2, M3, M4) nach Anspruch 1, dadurch gekennzeichnet, daß die Meßeinrichtung (CTRL; DET, µP) einen Schwellwertdetektor und einen Prozessor beinhaltet.

10. Modul (M1, M2, M3, M4) für ein Punkt-zu-Mehrpunkt Verteilnetz (NET) mit einem Vorwärtskanal zur Übertragung von Nachrichtensignalen,
**dadurch gekennzeichnet**,
daß eine erste Einrichtung (BP) vorgesehen ist zur frequenzmäßigen Separierung eines ersten Teilbereichs des Vorwärtskanals, der nicht zur Übertragung von Nachrichtensignalen verwendet wird, und
daß eine Meßeinrichtung (CTRL; DET, µP) vorgesehen ist zur Messung der Empfangsqualität in diesem ersten Teilbereich unter Berücksichtigung des Rauschen in diesem ersten Teilbereich.
